Europäisches Patentamt

European Patent Office

Office européen des brevets

(19)

(11) **EP 1 167 396 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.[7]: **C08F 10/02**, C08F 2/01, C08F 4/28

(21) Anmeldenummer: **01115053.9**

(22) Anmeldetag: **21.06.2001**

(54) **Prozessoptimierung der Peroxid-Einspritzung während der Polyethylenherstellung**

Process optimizing of the peroxide injection during polyethylene production

Optimisation du procédé d'injection de peroxides pendant la fabrication du polyéthylène

(84) Benannte Vertragsstaaten:
**AT BE CH CY DE DK ES FI FR GB GR IE IT LI LU MC NL PT SE TR**

(30) Priorität: **27.06.2000 DE 10030306**

(43) Veröffentlichungstag der Anmeldung:
**02.01.2002 Patentblatt 2002/01**

(73) Patentinhaber: **Basell Polyolefine GmbH**
**50389 Wesseling (DE)**

(72) Erfinder:
• **Hammer, Klaus**
**67112 Mutterstadt (DE)**

• **Groos, Georg**
**67125 Dannstadt-Schauernheim (DE)**
• **Stenger, Michael, Dr.**
**80637 München (DE)**
• **Weber, Wilhelm, Dr.**
**67435 Neustadt (DE)**
• **Deckers, Andreas, Dr.**
**55234 Flomborn (DE)**

(56) Entgegenhaltungen:
**EP-A- 0 449 092      EP-A- 0 567 818**
**DE-A- 19 912 855      US-A- 4 008 049**

**Beschreibung**

Die vorliegende Erfindung betrifft ein Verfahren zur Herstellung von Polyethylen, insbesondere von Polyethylen geringer Dichte (LD-PE), bei der eine Mehrfacheinspeisung von Peroxid stattfindet. Speziell betrifft die vorliegende Erfindung ein Verfahren zur Hochdruckpolymerisation von Ethylen in einem Hochdruckautoklaven oder in einem Hochdruckrohrreaktor mit einer oder mehreren Dosierstellen für ein oder mehrere Peroxide, dadurch gekennzeichnet, dass man während des Zeitintervalls, in dem man den Druck durch Öffnen eines Reizventils absenkt, kein oder weniger Peroxid dosiert und wieder die ursprüngliche ;Menge Peroxid pro Zeiteinheit dosiert, sobald sich nach dem Schließen des Reizventils der Druck so weit wieder aufgebaut hat, dass er 90 % der Druckdifferenz zwischen Nominaldruck und abgesenktem Druck überschreitet.

Technisch wird die Synthese von Polyethylen, zum Beispiel von LD-PE, entweder im kontinuierlichen Rührautoklaven oder im Rohrreaktor durchgeführt. In beiden Fällen arbeitet das Verfahren mit unterschiedlichen Druckstufen. Ein Niederdruckkompressor verdichtet das mit Katalysator versehene Frischgas (Ethen) auf 150 bis 300 bar. Dort wird es mit dem nicht reagierten Kreisgas des Hochdruckkreises vermischt und mit Hilfe des Hochdruckkompressors auf Betriebsdruck (in der Regel 1400 bis 3500 bar bei 130 bis 2705C) gebracht. Sowohl der Rohrreaktor, als auch der Rührautoklav können mit Mehrfacheinspeisungen von Initiator (Peroxid oder Sauerstoff) betrieben werden. Dies erlaubt eine geregelte Reaktionsführung und entsprechend bessere Wärmeabfuhr.

Als Peroxidische Initiatoren werden beispielsweise verwendet:

Didecanoylperoxid, 2,5-Dimethyl-2,5-di(2-ethylhexanoylperoxy)hexan,tert.-Amylperoxy-2-ethylhexanoat,Dibenzoylperoxid, tert.-Butylperoxy-2-ethylhexanoat, tert.Butylperoxydiethylacetat, tert.Butylperoxydiethylisobutyrat, 1,4-Di(tert.-butylperoxycarbo)-cyclohexan als Isomerengemisch, tert.-Butylperisononanoat 1,1-Di-(tert.-butylperoxy)-3,3,5-trimethylcyclohexan, 1,1-Di- (tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat, weiterhin tert.-Butylperoxybenzoat, Ditert.-amylperoxid, Dicumylperoxid, die isomeren Di-(tert.-butylperoxyisopropyl)benzole, 2,5-Dimethyl-2,5-ditert.-butylperoxyhexan, tert.-Butylcumylperoxid, 2,5-Dimethyl-2, 5-di (tert.-butylperoxy) -hex-3-in, Ditert.-butylperoxid. 1,31,3-Diisopropylmonohydroperoxid, Cumolhydroperoxid oder tert.-Butylhydroperoxid.

Im Falle Rohrreaktor wird die Wärmeabfuhr durch eine laminare Grenzschicht mit hohem Polymergehalt an der Wandung stark erschwert. Diese werden z. B. dadurch entfernt, indem man das Druckhalteventil am Reaktorausgang (Reizventil) alle 10 Sekunden bis einige Stunden kurzzeitig stärker öffnet und/oder eine Variation der Heißwassertemeratur vornimmt; die Grenzschicht wird dann durch die Turbulenz des ausströmenden Gases abgelöst und ausgetragen. Zur sicheren Handhabung von Ethen muß berücksichtigt werden, das das Ethen unter bestimmten Temperatur- und Druckbedingungen explosionsartig rasch zu Ruß, Methan und Wasserstoff zerfällt. Diese unerwünschte Reaktion kann besonders bei der Hochdruckpolymerisation des Ethens auftreten. Der damit im weiteren Verlauf verbundene drastische Druck- und Temperaturanstieg stellt ein erhebliches Gefahrenpotential für die Betriebssicherheit der Produktionsanlage dar. Auch bei rechtzeitigem Ansprechen der Druckentlastungseinrichtungen führt der Zerfall wegen der Rußbildung zu erheblichen Produktionsstörungen und zusätzlichen Kosten für die Reinigung und Instandsetzung der Anlage. Weiterhin kommt es durch den Rußausstoß zur Belastung der Umwelt.

Die Reaktionsbedingungen, unter denen eine Zersetzung des Ethens zu erwarten ist, kann man aus der Literatur entnehmen (siehe zum Beispiel Chem. -Ing.-Tech. 67 (1995), Seiten 862 bis 864).

Es ist Aufgabe der Erfindung, ein Verfahren zur Herstellung von Ethylen-Polymerisaten in einem Rohrreaktor oder Autoklaven anzugeben, das durch Vermeidung bzw. Entfernung größerer Ablagerungen einen guten Wärmetransport sicherstellt und das andererseits die Gefahr der Spontanzersetzung des Ethens drastisch vermindert. Es ist eine weitere Aufgabe der Erfindung, durch Erhöhung des pro Zeit- und Eduktgewichtseinheit zudosierten Peroxids den Umsatz zu steigern.

Die erfindungsgemäße Lösung der Aufgabe geht aus von einem Verfahren zur Hochdruckpolymerisation von Ethen in einem Rohrreaktor unter Mehrfacheinspeisung von Peroxid an verschiedenen Perxidzudosierungsstellen längs der Ethenhauptströmungsrichtung. Diese dosierte Peroxidmenge pro Zeiteinheit wird im Folgenden auch als ursprüngliche Menge bezeichnet. In näherungsweise konstanten Zeitabständen wird der Reaktionsdruck vorübergehend abgesenkt (Reizen). Das erfindungsgemäße Verfahren ist dann dadurch gekennzeichnet, daß während des Zeitintervalls zwischen dem Zeitpunkt des Durchschreitens eines Druckminimums des durch einen Reizvorgang erzeugten vorübergehenden Druckabfalls und dem Zeitpunkt des Erreichens eines Druckes, der dem Druckminimum des betreffenden Reizvorgangs zuzüglich 90 % der Druckabfallsamplitude des betreffenden Reizvorgangs entspricht, die an der jeweiligen Peroxidzudosierungsstelle in den Rohrreaktor eingebrachte Peroxidmenge pro Zeiteinheit gesenkt wird. Das wird erfindungsgemäß dadurch erreicht, dass man während des Zeitintervalls, in dem man den Druck durch Öffnen eines Reizventils absenkt, kein oder weniger Peroxid dosiert und wieder die ursprüngliche Menge Peroxid pro Zeiteinheit dosiert, sobald sich nach dem Schließen des Reizventils der Druck so weit wieder aufgebaut hat, dass er 90 % der Druckdifferenz zwischen Nominaldruck und abgesenktem Druck überschreitet. Bevorzugt vermindert man die Peroxidmenge, die man während des Reizvorgangs dosiert, um mindestens 15 % gegenüber der ursprünglichen Menge. Besonders bevorzugt vermindert man die Peroxidmenge, die man während des Reizvorgangs dosiert, um 15 bis 90 %. Ganz besonders bevorzugt vermindert man die Peroxidmenge, die man während des Reizvorgangs dosiert, um 30 bis 40 % oder um 45 bis 55 % oder um 60 bis 70 % oder um 70 bis 80 %. Dabei beziehen sich die prozentualen Angaben jeweils auf Gewichtsprozent.

Im Folgenden sollen einige bei der erfindungsgemäßen Lösung der Aufgabe verwendete Begriffe erklärt werden.

Bei den bekannten Verfahren wird in näherungsweise konstanten Zeitabschnitten der Reaktionsdruck vorübergehend abgesenkt. Dies geschieht durch vorübergehende Öffnung des Druckhalteventils, des Reizventils, wodurch der Druck zunächst abfällt und sich dann, nach Reaktivieren des Druckregelkreises, sich dem Sollwert wieder annähert. Ein solcher sogenannter Drucktransient weist ein relatives Druckminimum bei der Auftragung Druck versus Zeit auf. Der Druckabfall bis zum Erreichen des relativen Druckminimums ist relativ steil, der Druckanstieg nach Durchschreiten des relativen Druckminimus zunächst steil dann zunehmend flacher. Im Rahmen der Erfindung kommt eine besondere Bedeutung dem Zeitintervall zu, das durch den Zeitpunkt des Durchschreitens eines Druckminimums des durch einen Reizvorgang erzeugten vorübergehenden Druckabfalls und dem Zeitpunkt des Erreichens desjenigen Druckes begrenzt wird, der dem relativen Druckminimum des betreffenden Reizvorgangs zuzüglich 90 % der Druckabfallsamplitude des betreffenden Reizvorgangs entspricht. Unter Druckabfallsamplitude wird im Rahmen der Erfindung die Differenz zwischen Sollwert des Druckregelkreises und dem relativen Druckminimum des durch einen Reizvorgang erzeugten vorübergehenden Druckabfalls, also des Drucktransienten, verstanden.

Es versteht sich von selbst, dass der Druck nicht nur eine Funktion der Zeit ist, sondern auch eine Funktion der Reaktorkoordinaten. Insoweit beziehen sich alle Druckangaben im erfindungsgemäßen Verfahren auf den Druck, der im Reaktorrohr auf der Höhe der jeweiligen Peroxidzudosierungsstelle vorliegt.

Unter Peroxidzudosierungsstelle wird die Reaktorkoordinate verstanden, bei der Peroxid in den Reaktor eingebracht wird (im Rahmen der Mehrfacheinspeisung von Peroxid). Dies ist für jede Peroxidzudosierungsstelle einzeln zu beachten. Da der Druck auch eine Funktion der Reaktorkordinaten ist, ist in der Regel die Absenkung des pro Zeiteinheit zudosierten Peroxids für jede Peroxidzudosierungsstelle einzeln zu berechnen und zu steuern.

Die prozentuale Absenkung der pro Zeiteinheit zudosierten Peroxidmenge bezieht sich auf die pro Zeiteinheit zudosierte Peroxidmenge, die in allen anderen Betriebsphasen, insbesondere wenn kein Reizvorgang durchlaufen wird, in den Reaktor an der jeweiligen Perxidzudosierungsstelle eingebracht wird.

Es wurde beobachtet, dass der sich an den Druckabfall anschließende Druckanstieg in konventionellen Verfahren auf den Sollwert und die damit verbundene Verlangsamung des Massestroms die Zersetzung des Ethens stark begünstigen. Es wurde weiterhin beobachtet, daß lokale Zersetzungsprozesse in der Regel 5 bis 6 Sekunden nach dem infolge des Reizens durchschrittenen Druckminimum auftreten.

Erfindungsgemäß wird während des kritischen Zeitbereiches, währenddessen der Druck auf den Sollwert ansteigt, durch Absenken der in die jeweilige Peroxidzudosierungsstelle pro Zeiteinheit eingebrachten Peroxidmenge, bevorzugt um mindestens 15 % gegenüber der in den anderen Betriebsphasen pro Zeiteinheit zudosierten Peroxidmenge

- die Polymerisation in Nähe der Zudosierungsstelle abgebremst werden,

- die infolge des verminderten Massestroms und der ebenfalls verminderten Konvektion erhöhte lokale Konzentration des Peroxids vermindert werden.

Durch diese Maßnahme wird die Reaktorsicherheit erhöht, ohne auf den Reizvorgang verzichten zu müssen. Andererseits könnte auf diese Weise auch bei gleichbleibender Reaktorsicherheit die auf Ethen bezogene spezifische Peroxidmenge, und so mittelbar der Umsatz, erhöht werden.

In einer bevorzugten Ausführungsform des erfindungsgemäßen Verfahrens wird die eingebrachte Peroxidmenge um mindestens 15 %, besonders bevorzugt um 15 bis 90 %, ganz besonders bevorzugt um 30 bis 40 % oder um 45 bis 55 % oder um 60 bis 70 % oder um 70 bis 80 % vermindert.

Die nach dem erfindungsgemäßen Verfahren erhältlichen Polyethylene haben eine Dichte von 0,900 bis 0,955 $g/cm^3$, bevorzugt von 0,910 bis 0,945 $g/cm^3$ und besonders bevorzugt von 0,915 bis 0,940 $g/cm^3$, gemessen bei 23°C. Gut lassen sich nach dem erfindungsgemäßen Verfahren Polyethylenwachse mit einem Molekulargewicht $M_n$ von maximal 20 000 g, bevorzugt maximal 10 000 g und besonders bevorzugt maximal 7500 g herstellen. Die Molekulargewichtsverteilung liegt im Bereich von 2 bis 10. Die Schmelzpunkte liegen im Bereich von 60 bis 125°C, bevorzugt 80 bis 120°C. Aber auch zur Herstellung von höhermolekularem LD-PE mit einem Molekulargewicht $M_n$, das höher ist als 20 000 g, bevorzugt höher als 80 000 g und besonders bevorzugt höher als 120 000 g, ist das erfindungsgemäße Verfahren gut geeignet. Die Molekulargewichtsverteilung des nach dem erfindungsgemäßen Verfahren hergestellten höhermolekularen LD-PE liegt im Bereich von 2 bis 20.

Das erfindungsgemäße Verfahren wird mit Hilfe der nachfolgenden Zeichnung näher erläutert. Es zeigen

Fig. 1    den schematischen Aufbau einer Vorrichtung zur Durchführung des erfindungsgemäßen Verfahrens,

Fig. 2    die Wechselbeziehung zwischen Reaktordruck (P) und pro Zeiteinheit (T) eingespeister Peroxidmenge (n) jeweils als Funktion der Zeit (t).

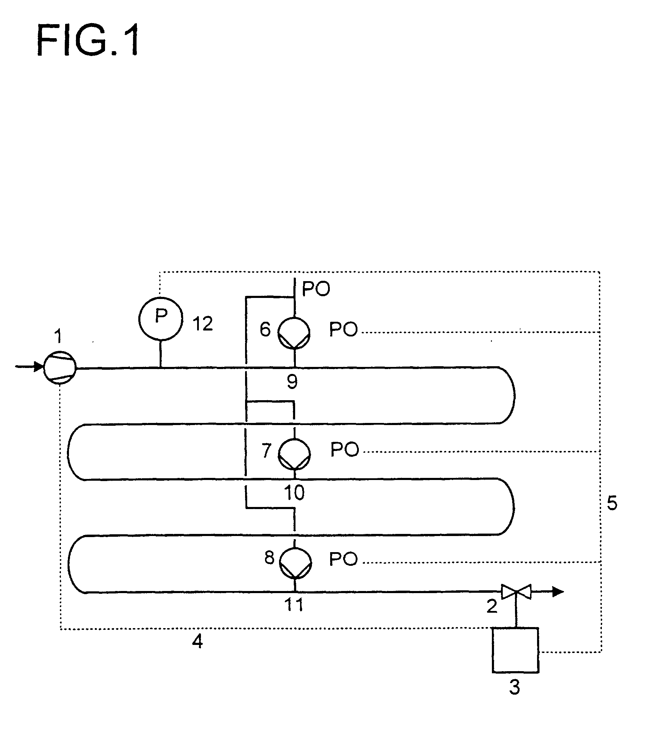

In Fig. 1 bezeichnet 1 einen Hochdruckgasverdichter, der Ethen gegebenenfalls unter Zusatz von Sauerstoff auf den Betriebsdruck verdichtet. Dabei bildet der Verdichter 1 zusammen mit dem Druckhalteventil (Reizventil) 2 einen Regelkreis 4, der von einem Regelcomputer 3 gesteuert wird. Längs des Rohrreaktors, also längs der Ethenhauptströmungsrichtung sind verschiedene Peroxidzudosierungsstellen 9, 10, 11 vorgesehen, an welchen Zudosierungspumpen 6, 7, 8 Peroxid in den Rohrreaktor einspeisen. Die Zudosierungspumpen 6, 7, 8 bilden mit dem Druckhalteventil 2 einen Regelkreis 5, der ebenfalls von einem Regelcomputer 3 gesteuert wird. Außerdem ist der Regelcomputer 3 mit dem Druckmesser 12 verbunden, der eine zeitaufgelöste Messung des Druckes erlaubt. Durch mathematische Modellierung des Druckes als Funktion der Zeit und unter Berücksichtigung der Materialeigenschaften des Polymerisates (Dichte, Viskosität) wird der lokale Druck an den Peroxidzudisierungsstellen 9, 10, 11 berechnet und daraus die einzuspeisende Menge Peroxid als Funktion der Zeit bestimmt.

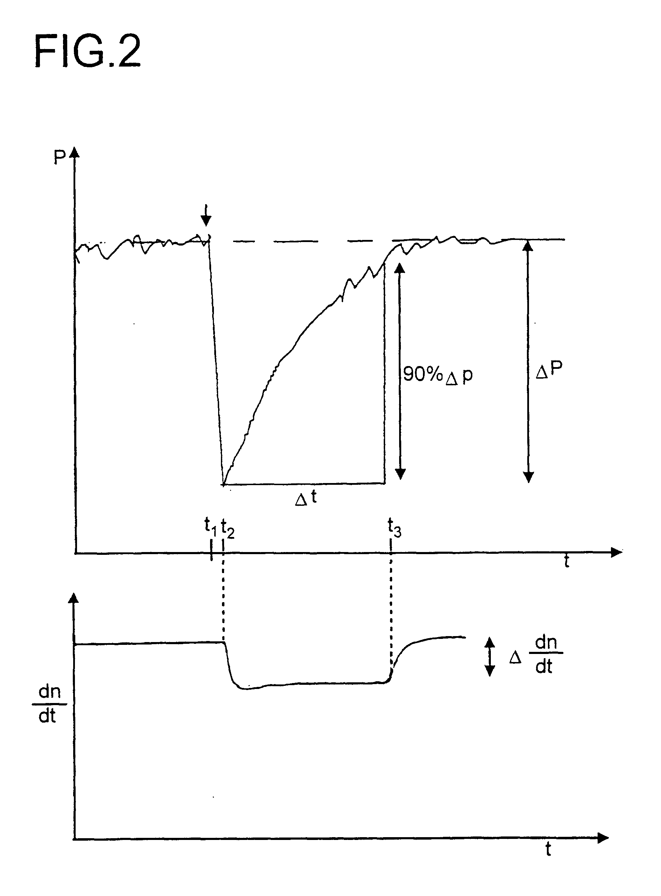

Fig. 2 zeigt einen durch einen Reizvorgang bewirkten vorübergehenden Druckabfall, einen sogenannten Drucktransienten. Der Reizvorgang wird zum Zeitpunkt $t_1$ durch Öffnung des Druckhalteventils eingeleitet. Das relative Druckminimum wird unmittelbar vor dem Reaktivieren des Druckregelkreises und dem damit einhergehenden zumindest partiellen Schließen des Druckhalteventils zum Zeitpunkt $t_2$ erreicht. Das Zeitintervall zwischen dem Durchschreiten des relativen Druckminimums zum Zeitpunkt $t_2$ und dem Zeitpunkt $t_3$ des Erreichens eines Druckes, der dem Druckminimum zuzüglich von 90 % der Druckabfallsamplitude des betreffenden Reizvorgangs ($\Delta P$) entspricht, wird mit $\Delta t$ bezeichnet. Während dieses Zeitintervalls

wird die pro Zeiteinheit eingespeiste Peroxidmenge ($\frac{dn}{dt}$) um mindestens 15 % abgesenkt.

## Patentansprüche

1.    Verfahren zur Hochdruckpolymerisation von Ethylen in einem Hochdruckautoklaven oder in einem Hochdruckrohrreaktor mit einer oder mehreren Dosierstellen für ein oder mehrere Peroxide, **dadurch gekennzeichnet, dass** man während des Zeitintervalls, in dem man den Druck durch Öffnen eines Reizventils absenkt, kein oder weniger Peroxid dosiert und wieder die ursprüngliche Menge Peroxid pro Zeiteinheit dosiert, sobald sich nach dem Schließen des Reizventils der Druck so weit wieder aufgebaut hat, dass er 90% der Druckdifferenz zwischen Nominaldruck und abgesenktem Druck überschreitet.

2.    Verfahren nach Anspruch 1, **dadurch gekennzeichnet, dass** man die Peroxidmenge, die man während des Reizvorgangs dosiert, um mindestens 15% gegenüber der ursprünglichen Menge vermindert.

3.    Verfahren nach Anspruch 1, **dadurch gekennzeichnet, dass** man die Peroxidmenge, die man während des Reizvorgangs dosiert, um 15 bis 90% gegenüber der ursprünglichen Menge vermindert.

4.    Verfahren nach Anspruch 1, **dadurch gekennzeichnet, dass** man die Peroxidmenge, die man während des Reizvorgangs dosiert, um 30 bis 40% gegenüber der ursprünglichen Menge vermindert.

5.    Verfahren nach Anspruch 1, **dadurch gekennzeichnet, dass** man die Peroxidmenge, die man während des Reizvorgangs dosiert, um 45 bis 55% gegenüber der ursprünglichen Menge vermindert.

6.    Verfahren nach Anspruch 1, **dadurch gekennzeichnet, dass** man die Peroxidmenge, die man während des Reizvorgangs dosiert, um 60 bis 70% gegenüber der ursprünglichen Menge vermindert.

7.    Verfahren nach Anspruch 1, **dadurch gekennzeichnet, dass** man die Peroxidmenge, die man während des Reizvorgangs dosiert, um 70 bis 80% gegenüber der ursprünglichen Menge vermindert.

## Claims

1.    A process for the high-pressure polymerization of ethylene in a high-pressure autoclave or in a high-pressure tube reactor having one or more metering points for one or more peroxides, wherein no peroxide or a reduced amount of peroxide is metered in during the time interval in which the pressure is lowered by opening a pressure maintenance valve and the original amount of peroxide per unit time is metered in again as soon as the pressure after closure of the pressure maintenance valve has built up again so that it exceeds 90% of the pressure difference between nominal pressure and lowered pressure.

2.    A process as claimed in claim 1, wherein the amount of peroxide metered in during the pressure-reduction procedure is reduced by at least 15% of the original amount.

3. A process as claimed in claim 1, wherein the amount of peroxide metered in during the pressure-reduction procedure is reduced by from 15 to 90% of the original amount.

4. A process as claimed in claim 1, wherein the amount of peroxide metered in during the pressure-reduction procedure is reduced by from 30 to 40% of the original amount.

5. A process as claimed in claim 1, wherein the amount of peroxide metered in during the pressure-reduction procedure is reduced by from 45 to 55% of the original amount.

6. A process as claimed in claim 1, wherein the amount of peroxide metered in during the pressure-reduction procedure is reduced by from 60 to 70% of the original amount.

7. A process as claimed in claim 1, wherein the amount of peroxide metered in during the pressure-reduction procedure is reduced by from 70 to 80% of the original amount.

**Revendications**

1. Procédé pour la polymérisation d'éthylène sous haute pression dans un autoclave à haute pression ou dans un réacteur à haute pression équipé d'un ou plusieurs points d'introduction dosée pour un ou plusieurs peroxydes, **caractérisé par le fait qu'**on n'introduit pas ou on introduit peu de peroxyde pendant l'intervalle de temps durant lequel on abaisse la pression en ouvrant une vanne de stimulation, et on reprend l'introduction dosée de la quantité initiale de peroxyde par unité de temps dès que la pression a été rétablie après la fermeture de la vanne de stimulation suffisamment pour qu'elle dépasse 90% de la différence de pression entre la pression normale et la pression réduite.

2. Procédé selon la revendication 1, **caractérisé par le fait qu'**on diminue la quantité de peroxyde que l'on introduit en quantité dosée pendant l'opération de stimulation, d'au moins 15% par rapport à la quantité initiale.

3. Procédé selon 1 revendication 1, **caractérisé par le fait qu'**on abaisse la quantité de peroxyde, que l'on introduit en quantité dosée pendant l'opération de stimulation, de 15 à 90% par rapport à la quantité initiale.

4. Procédé selon 1 revendication 1, **caractérisé par le fait qu'**on abaisse la quantité de peroxyde, que l'on introduit en quantité dosée pendant l'opération de stimulation, de 30 à 40% par rapport à la quantité initiale.

5. Procédé selon 1 revendication 1, **caractérisé par le fait qu'**on abaisse la quantité de peroxyde, que l'on introduit en quantité dosée pendant l'opération de stimulation, de 45 à 55% par rapport à la quantité initiale.

6. Procédé selon 1 revendication 1, **caractérisé par le fait qu'**on abaisse la quantité de peroxyde, que l'on introduit en quantité dosée pendant l'opération de stimulation, de 60 à 70% par rapport à la quantité initiale.

7. Procédé selon revendication 1, **caractérisé par le fait qu'**on abaisse la quantité de peroxyde, que l'on introduit en quantité dosée pendant l'opération de stimulation, de 70 à 80% par rapport à la quantité initiale.

# FIG.1

# FIG.2